# EUROPÄISCHE PATENTSCHRIFT

(11) **EP 1 691 093 B1**
(45) Veröffentlichungstag und Bekanntmachung des Hinweises auf die Patenterteilung: **24.09.2008**
(21) Anmeldenummer: 05100982.7
(22) Anmeldetag: 11.02.2005
(51) Int. Cl.: F16D 3/28

(54) **Axiale Isolierung für ein kardanisches Kreuzgelenk**
Axial insulation for a crosspiece of a universal joint
Isolement axial pour un croissillon d'un joint universel

(43) Veröffentlichungstag der Anmeldung: 16.08.2006
(73) Patentinhaber: Ford Global Technologies, LLC, Dearborn, MI 48126 (US)
(72) Erfinder: Gross, Norbert, D-40221 Düsseldorf (DE)
(74) Vertreter: Drömer, Hans-Carsten

(56) Entgegenhaltungen:
- EP-A- 1 475 549
- FR-A- 2 192 651
- US-A- 2 024 777
- US-A- 5 551 919

## Beschreibung

Die Erfindung betrifft ein Kardangelenk, das zwei Gelenkgabeln aufweist, wobei eine der Gelenkgabeln mit einer angetriebenen Welle bzw. Antriebswelle und die andere Gelenkgabel mit einer anzutreibenden Welle bzw. Abtriebswelle verbindbar bzw. verbunden ist, und wobei die beiden Gelenkgabeln um 90° radial verdreht zueinander angeordnet sind, so dass die beiden Gelenkgabeln einen Innenraum bilden, wobei dem Kardangelenk ein elastisches Kupplungselement zugeordnet ist.

Kardangelenke werden üblicherweise verwendet, wenn zwei drehmomentübertragende Wellen, deren fluchtende Ausrichtung nicht immer gewährleistet ist, miteinander verbunden werden sollen. Das Kardangelenk besteht dabei üblicherweise aus zwei einander gegenüberliegenden, um 90° gegeneinander versetzten Gelenkgabeln, die jeweils ein Ende der zwei gelenkig miteinander zu verbindenden Wellen darstellen. Zwischen den Gelenkgabeln ist ein Gelenkkreuz angeordnet, das aus zwei um 90° gegeneinander versetzten Zapfenträgem besteht, wobei das Gelenkkreuz einstückig hergestellt ist, so dass die beiden Zapfenträger starr miteinander verbunden sind. Die Zapfenträger sind dabei jeweils in den beiden Gelenkgabeln um ihre Achse drehbar gelagert.

Bei der Übertragung von Antriebskräften, ist der Fachmann regelmäßig vor die Aufgabe gestellt, zwar die Drehbewegung zu übertragen, Schwingungen und Stöße aber bei der Übertragung möglichst zu eliminieren. Derartige Störungen können beispielsweise durch Schwingungen von der Antriebseinheit hervorgerufen werden. Dieses Problem macht sich besonders im Automobilbau, insbesondere im Bereich des Antriebsstrangs, beispielsweise im Bereich der Kardanwelle, wo die Schwingungen zwischen Antriebsaggregat und Hinterachse ungehindert übertragen werden, und im Bereich des Lenkungsstranges bzw. in der Lenksäule, wo bei Verwendung herkömmlicher Kardangelenke keinerlei Isolierung gegen durch Fahrbahnunebenheiten aufgezwungene niederfrequente Schwingungen bzw. Stöße erfolgt, bemerkbar. Derartige Störungen können einerseits zu Schädigungen im Antriebsstrang bzw. der Lenksäule und/oder zu akustischen oder mechanischen Beeinträchtigungen beim Fahrer führen.

Zum Zwecke akustischer oder schwingungsdynamischer Abkopplung, insbesondere in der Lenksäule ist es beispielsweise bekannt eine torsionselastische Kupplung mit einer so genannten Hardy-Scheibe, als axial elastisches Kupplungselement oder einer Schlingenscheibe zu verwenden. Die Hardy-Scheibe wird beispielsweise in der Lenksäule zwischen dem unteren Kardangelenk und einem Lenkgehäuse bzw. Lenkgetriebe oder zwischen den Kardangelenken angeordnet. Die in Drehrichtung steife Hardy-Scheibe ist derart ausgestaltet, dass diese in axialer Richtung der Lenksäule weich mit geringen Fähigkeiten zur Weiterleitung eines Biegemomentes ausgestaltet ist. Prinzipbedingt ist die Biegesteifigkeit der Hardyscheibe relativ gering. Dies bewirkt eine Verzerrung der Hardy-Scheibe mit den Biegemomenten aus dem Kardangelenk, falls die Hardy-Scheibe wie üblich in Serie mit dem Kardangelenk angeordnet ist. Da eine Hardy-Scheibe allein (ohne Kardangelenk) zumindest bei entsprechenden Standzeiten nicht geeignet ist, nicht fluchtende Wellen zu verbinden, wird nachteilig die Anzahl der Bauteile mit der notwendigen Serienanordnung mit dem Kardangelenk erhöht. Darüber hinaus ist der axiale Bauraum dadurch erhöht, und die übliche Kompensation der Ungleichförmigkeiten mit zwei gegenphasig angeordneten kardanischen Gelenken wird durch die zusätzliche Hardy-Scheibe gestört, da sie in Serie placiert wie ein zusätzliches Gelenk wirkt.

Die EP 0 563 940 B1 betrifft ein Kreuzgelenk mit zwei einander gegenüberliegenden, um 90° gegeneinander versetzten Gabeln, die jeweils Bestandteil je einer von zwei gelenkig miteinander zu verbindenden Wellen sind, oder die jeweils mit je einem von zwei gelenkig miteinander zu verbindenden Wellenenden verbindbar sind. Das Kreuzgelenk weist zwei um 90° gegeneinander versetzte, ein Zapfenkreuz bildende Zapfenpaare auf, die in den jeweiligen Gabelenden um ihre Achse drehbar und, bezogen auf die Drehachse der Wellen, drehmomentübertragend gelagert sind. Die beiden Zapfenpaare sind in der durch das Zapfenkreuz gebildeten Ebene zumindest geringfügig gegeneinander verschwenkbar, wobei jeder Zapfen in einem Ankerbock gelagert ist. Einander benachbarte Ankerböcke sind durch ein elastisches Kupplungselement miteinander verbunden. Das elastische Kupplungselement enthält ortsfest angeordnete, schlingenförmige Verstärkungseinlagen, die jeweils zwei benachbarte Ankerböcke miteinander verbinden. Die schlingenförmigen Verstärkungseinlagen liegen entlang dem Umfang des Kreuzgelenkes in einer Schlingenebene, die senkrecht zur Ebene des Zapfenkreuzes ist.

Als ein Hauptnachteil des in der EP 0 563 940 B1 offenbarten Kreuzgelenkes ist anzusehen, dass die beiden Zapfenpaare unterschiedlich die eigenen Zapfen schlüssig miteinander verbindet: Das eine Paar verwendet einen durchgängigen Bolzen, das andere Paar ist konfiguriert aus zwei kurzen Zapfen, die durch ein zusätzliches Verbindungsstück miteinander verbunden werden. Hierdurch wird zur Herstellung eines jeden Zapfens bzw. Zapfenpaares ein unterschiedliches Herstellungswerkzeug benötigt, wodurch die Herstellung des Kreuzgelenkes äußerst kostenintensiv ist. Das erforderliche Verbindungsstück beschränkt zudem die axiale und radiale Freigängigkeit des Gelenks. Außerdem ist der axiale Bauraumbedarf optimierbar.

Nachteilig ist weiterhin, dass das in der EP 0 563 940 B1 offenbarte Kreuzgelenk in seiner Konstruktion sehr aufwendig und damit sehr störanfällig ist. Als Nachteil ist weiter anzusehen, dass die Gabeln in der Weite klein und deren Gabellager somit größer (teurer) ausgeführt werden müssen, um bei sinnvollen Baugrößen ein hinreichendes Drehmoment zu übertragen. Wird bei dem Kreuzgelenk der EP 0 563 940 B1 der flexible Ring beschädigt, muß ein Ersatzring radial über die Anker zugeführt werden. Darüber hinaus ist das Kreuzgelenk gerade bei schnell drehenden Wellen schwierig auszuwuchten.

In der US 4,850,933 ist eine flexible Verbindung zur Verbindung einer angetriebenen Welle mit einer anzutreibenden Welle offenbart. Die Verbindung umfasst:
eine flexible Zentralscheibe, die eine winklige Ausrichtung ermöglicht,
eine Mehrzahl tragender Blattfedem, die eine parallele Ausrichtung ermöglichen, wobei die Blattfedern jeweils erste und zweite Enden aufweisen,
eine Antriebsplatte und eine angetriebene Platte,
ein erstes paar L-förmige Haltenasen, die mit gegenüberliegenden Seiten der angetriebenen Platte und mit dem ersten Ende des ersten Paares der Blattfedern verbunden sind,
ein zweites paar L-förmige Haltenasen, die mit gegenüberliegenden Seiten der anzutreibenden Platte und mit dem ersten Ende des zweiten Paares der Blattfedern verbunden sind,

Mitteln, die mit dem ersten Paar L-förmige Haltenasen verbunden, aber getrennt davon sind, zur Verbindung der zweiten Enden des ersten Paares der Blattfedern mit gegenüberliegenden Enden der flexiblen Zentralscheibe,

Mitteln, die mit dem ersten Paar L-förmige Haltenasen verbunden, aber getrennt davon sind, zur Verbindung der zweiten Enden des zweiten Paares der Blattfedern mit gegenüberliegenden Enden der flexiblen Zentralscheibe,
eine erste Verbindungsnabe, die mit der angetriebenen Platte verbunden ist, um die angetriebene Platte mit der Antriebswelle zu verbinden,
eine zweite Verbindungsnabe, die mit der anzutreibenden Platte verbunden ist, um die anzutreibenden Platte mit der anzutreibenden Welle zu verbinden.

Die EP 0 160 599 beschreibt eine elastische Kupplungseinheit mit einem ersten und einem zweiten Gabelgelenk zur Befestigung an jeweils einem treibenden Element und einem getriebenen Element. Die Gabelgelenke weisen derart angeordnete Schenkel auf, dass die Schenkel des ersten Gabelgelenks und des zweiten Gabelgelenks ineinander geschachtelt sind. An jedem Gabelgelenk ist eine Zierblende befestigt, wobei die Flächen dieser zwei Zierblenden nahezu senkrecht zur Drehachse der Einheit angeordnet sind, dass ein Verbindungselement aus Elastomer an diesen Zierblendenflächen befestigt ist. Jede Zierblende ist an dem jeweiligen Gabelgelenk mittels eines in mindestens eine Öffnung der Zierblende und in den Schenkeln des Gabelgelenks ausgesparte Ausnehmungen eingeführten Bolzens befestigt.

Die GB 942,495 offenbart eine Verbindung für Wellen. Die Verbindung weist eine flexible Scheibe mit Kupplungselemente auf, die jeweils an einer Seite der Scheibe angeordnet sind. Jedem Kupplungselement ist eine zu verbindende Welle zugeordnet. Die Kupplungselemente sind in einem rechten Winkel um die Scheibe gedreht, und liegen normal zur Scheibenachse. Während des Betriebes der Verbindung, kann eine winklige Ausrichtung der verbundenen Wellen angepasst werden, in dem die Kupplungselemente gedreht werden, ohne das die Scheibe gebogen wird. Die Scheibe besteht ganz oder teilweise aus Plastik, Gummi oder ähnlichen elastischen Material, so dass dieses während der Verbindung biegefrei ist.

Als ein Hauptnachteil der in der GB 942,495 offenbarten Verbindung für Wellen ist anzusehen, dass die Kupplungselemente mit Spiel zur Scheibe und mit signifikanter Reibung gedreht werden, wobei das Verdrehspiel und die Reibung lediglich geringen Ansprüchen genügt.

Die US 5551919 offenbart ein Kardangelenk gemäß dem Oberbegriff des Anspruchs 1.

Der Erfindung liegt die Aufgabe zugrunde, ein Kardangelenk der eingangs genannten Art mit einfachen Mitteln dahingehend zu verbessern, so dass dieses unter wirtschaftlichen Aspekten günstiger herstellbar ist, ohne dass das elastische Kupplungselement signifikante Biegemomente durchleiten muss.

Diese Aufgabe wird durch die Merkmale des Anspruchs 1 gelöst.

Vorteilhafterweise kann bei dem erfindungsgemäßen Kardangelenk somit auf ein bisher übliches Gelenkkreuz verzichtet werden. Damit ist das Kardangelenk leichter und kostengünstiger herzustellen. Die Lagerelemente in den Gabelschenkeln sind in der Lage zusätzlich zu den radialen und axialen Kräften ein Biegemoment für die fliegende Lagerung der Befestigungselemente aufzunehmen, wobei die Lagerelemente eine entsprechende Baulänge in radialer Richtung gesehen aufweisen sollten. Insbesondere durch eine identische Ausgestaltung der jeweiligen Befestigungselemente, ist es möglich sowohl Lagerhaltungs- und/oder Bereitstellungskosten als auch Herstellungskosten zu senken, da eine Herstellung der jeweiligen, identischen Befestigungselemente mit einem Herstellungswerkzeug möglich ist. Damit müssen die identischen Befestigungselemente aber auch nicht mehr gesondert gelagert werden, was bei unterschiedlichen Bauteilen durchaus sinnvoll ist.

Das erfindungsgemäße Kardangelenk eignet sich insbesondere zum Einsatz in einer Lenksäule eines Kraftfahrzeuges, wobei gegenüber einem herkömmlichen Kardangelenk axiale Stöße herausfiltbar sind. Dieses Verhalten ist besonders wünschenswert in Lenksäulenkonstruktionen, da axiale Stöße z. B. durch Straßenanregungen so von einem Lenkrad abgehalten werden können, ohne dass Einbußen hinsichtlich einer Drehsteifigkeit in Kauf genommen werden müssen. Durch die Integration der Elastizität durch das zweifach drehbar gelagerte elastische Kupplungselement in das Kardangelenk oder um dieses herum wird vermieden, dass neben einer axialen Nachgiebigkeit auch eine Biegesteifigkeit bereitgestellt werden muss. Mittels des erfindungsgemäßen Kardangelenkes kann die axiale Nachgiebigkeit größer ausgeführt werden, so dass auch Isolationseigenschaften gegenüber herkömmlichen elastischen Kupplungen in Lenksäutenkonstruktionen verbessert sind. Das integrierte elastische Kupplungselement muss keine signifikanten Biegemomente durchleiten, da das elastische Kupplungselement in der Achse der Momente durch Lager biegefrei gehalten ist. Dies ermöglicht eine ideale Nachgiebigkeitseigenschaft in axialer Richtung ohne Biegewiderstände mit optimaler Steifigkeit in Rotationsrichtung. Die große axiale Nachgiebigkeit des Gelenkes kann den Wegfall des sonst üblichen Verschiebegelenkes in der Lenksäule, welches Einbautoleranzen und Straßenanregungen kompensieren muss, begünstigen. Weiter kann das efindungsgemäße Kardangelenk, wenn mit einer Scheibe ausgeführt, mit vergleichsweise großen Gabelweiten und vorteilhaft mit entsprechend klein bemessenen Gabellagern in einer sinnvollen Baugröße hergestellt werden, wobei wesentlich höhere Drehmomente übertragbar sind, als bei einem Kardangelenk mit kleinen Gabelweiten und größeren (teureren) Gabellagern. Weiter erlaubt die erfindungsgemäße Integration des Ringes ein einfaches Zuführen des flexiblen Ringes in axialer Richtung. Aus der fliegenden Lagerung der Befestigungselemente ergibt sich eine große axiale Freigängigkeit des Gelenks, die nur noch durch die Nachgiebigkeitscharakteristik des flexiblen Elementes eingestellt wird. Ebenso erfordert das erfindungsgemäße Kardangelenk ein Minimum an axialem Bauraumbedarf.

Weitere vorteilhafte Ausgestaltungen der Erfindung sind in den Unteransprüchen und in der folgenden Figurenbeschreibung offenbart. Es zeigen:
- Fig. 1: Eine Seitenansicht eines Kardangelenks,
- Fig. 2: eine Darstellung entlang des Schnittes A aus Figur 1,
- Fig. 3: eine Seitenansicht eines Kardangelenks in einer zweiten Ausführung, und
- Fig. 4: eine Darstellung entlang des Schnittes A aus Figur 3.

In den unterschiedlichen Figuren sind gleiche Teile stets mit demselben Bezugszeichen versehen, so dass diese in der Regel auch nur einmal beschrieben werden.

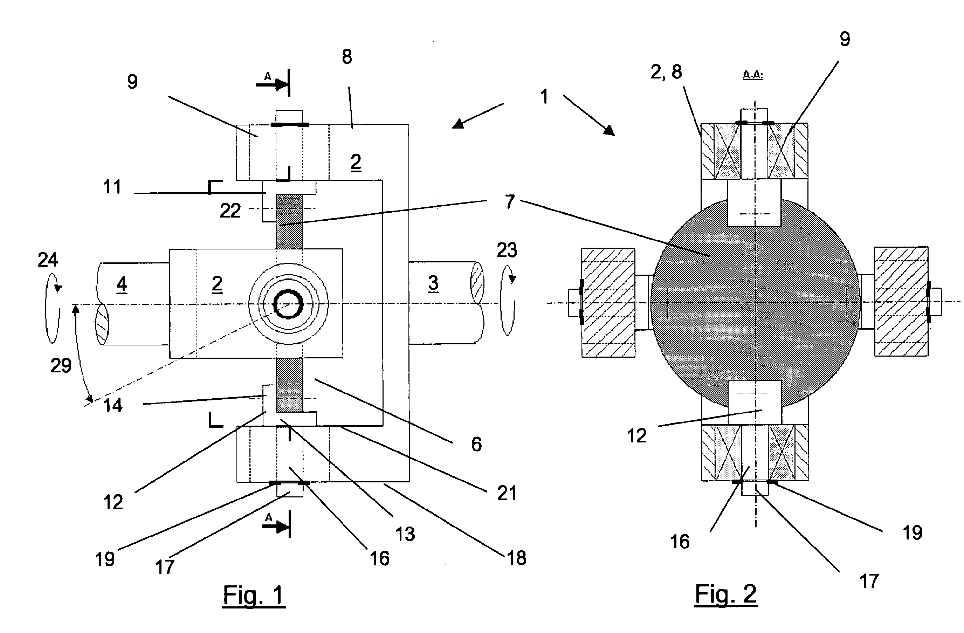

Die Figuren 1 und 2 zeigen ein Kardangelenk 1, das zwei Gelenkgabeln 2 aufweist. Eine der Gelenkgabeln 2 ist mit einer angetriebenen Welle 3 bzw. Antriebswelle 3 verbunden, wobei die andere Gelenkgabel 2 mit einer anzutreibenden Welle 4 bzw. Abtriebswelle 4 verbunden ist. Die beiden Gelenkgabein 2 sind um 90° radial verdreht zueinander angeordnet, so dass die beiden Gelenkgabeln 2 einen Innenraum 6 bilden. Dem Kardangelenk 1 ist ein elastisches Kupplungselement 7 zugeordnet. Den Gelenkgabeln 2 sind an ihren jeweils gegenüberliegenden Gabelschenkeln 8 Lagerelemente 9 zugeordnet. In den Lagerelementen 9 sind Befestigungselemente 11 drehbar gelagert, wobei die Befestigungselemente 11 über das elastische Kupplungselement 7 miteinander verbunden sind.

Die Lagerelemente 9 sind bevorzugt derart ausgestaltet, dass diese ein Biegemoment aufnehmen können. Daher sind die Lagerelemente 9 bevorzugt als doppelreihige Wälzlager beispielsweise als zweireihige Kugellager ausgeführt. Die Lagerelemente 9 können aber auch als breite Gleitlager ausgeführt sein. Die Lagerelemente 9 werden geeignet radial zur Gelenkachse in den Gelenkgabeln 2 bzw. deren Gabeischenkeln 8 fixiert. Mögliche Ausführungsformen sind zum Beispiel Presspassung, Klebung oder Formschluss (Schulteranlage, Springring oder dergleichen) der Lageraußenringe.

Dem Kardangelenk 1 sind entsprechend der Anzahl der Gabelschenkel 8 vier Befestigungselemente 11 zugeordnet, die einander identisch sind, weswegen nachfolgend lediglich eines beschrieben wird.

Das Befestigungselement 11 ist als Drehbolzen ausgeführt, und weist einen im Querschnitt gesehen L-förmigen Bereich 12 mit einem Quersteg 13 und einem in den Figuren 1 und 2 radial nach innen weisenden, senkrecht zu dem Quersteg 13 angeordneten Basissteg 14 auf. Der L-förmige Bereich 12 geht in einen Zapfen 16 über, der in dem in den Figuren 1 und 2 dargestellten Ausführungsbeispiel mit seinem zum L-förmigen Bereich 12 gegenüberliegenden freien Ende 17 eine zum Innenraum 6 gegenüberliegenden Außenseite 18 der Gelenkgabeln 2, insbesondere der Gabelschenkel 8 in radialer Richtung etwas überragt.

Dem freien Ende 17 ist ein Sicherungselement 19, vorzugsweise ein Wellensicherungsring zugeordnet, der in einer entsprechenden Nut gelagert ist. Die Nut ist an einer geeigneten Stelle in dem freien Ende 17 eingebracht.

Der Zapfen 16 ist entsprechend dem Abstand der Lagerelemente 9 in den jeweiligen Gelenkgabeln 2 ausgeführt, so dass das Befestigungselement 11 drehbar in den jeweiligen Gabelschenkeln 8 der jeweiligen Gelenkgabeln 2 gelagert ist.

Die Befestigungselemente 11 sind in dem in den Figuren 1 und 2 dargestellten Ausführungsbeispiel mit ihren L-förmigen Bereichen 12 fliegend gelagert in dem Innenraum 6 angeordnet, und sind mit ihrem Quersteg 13 jeweils zu einer zur Außenseite 18 der Gabelschenkel 8 gegenüberliegenden Innenseite 21 angeordnet. Der Quersteg 13 liegt an dem Lagerelement 9 bzw. der zur Innenseite 21 orientierten Seite des Lagerelementes 9 an. Die zu den vier Befestigungselementen 11 zugehörigen L-förmigen Bereiche 12 sind räumlich voneinander getrennt. Zur Verbindung der Befestigungselemente 11 ist das elastische Kupplungselement 7 vorgesehen.

Das elastische Kupplungselement 7 ist in dem in den Figuren 1 und 2 dargestellten Ausführungsbeispiel als Scheibe, bevorzugt als torsionssteife, biege-elastische bzw. axial elastische Scheibe beispielsweise mit runder, vieleckiger oder polygonaler Ausgestaltung, vorzugsweise als Hardy-Scheibe ausgestaltet und mit dem Basissteg 14 in dem Innenraum 6 verbunden. Denkbar ist aber auch, dass das elastische Kupplungselement 7 in dem Ausführungsbeispiel nach den Figuren 1 und 2 als torsionssteifer, biege-elastischer Ring bzw. Kreisring ausgestaltet ist. Das elastische Kupplungselement 7 besteht zum Beispiel aus einem Gummi. Als Verbindung mit dem jeweiligen Befestigungselement 11 kann beispielsweise eine Schraubverbindung, Nietverbindung, Vulkanisierung oder dergleichen vorgesehen sein. Die Verbindung ist in den Figuren 1 und 2 prinzipiell mittels einer strichpunktierten Linie 22 dargestellt.

In dem Kardangelenk 1 wird ein Eingangsmoment (Drehrichtung 23) über die angetriebene Welle 3 (Antriebswelle) über die Gelenkgabel 2 auf das in ihr drehbar gelagerte Befestigungselementenpaar bzw. die jeweils in den gegenüberliegenden Gabelschenkein 8 gelagerten Befestigungselemente 11 und von dort auf das elastische Kupplungselement 7 als Zug-/Druckspannung an die jeweils kreuzenden Befestigungselemente 11 und dann weiter auf die Gelenkgabel 2 der anzutreibenden Welle 4 bzw. Abtriebswelle übertragen. Dies ist mittels des zum Eingangsmoment (Drehrichtung 23) gleichsinnigen Ausgangsmoments (Drehrichtung 24) dargestellt. Das elastische Kupplungselement 7 ist hinsichtlich der geringfügig erforderlichen Biegesteifigkeit derart gewählt, dass sichergestellt wird, dass eine Drehung des Befestigungselementes 11 bzw. dessen Zapfens 16 bei Neigung (inklination 29) und Rotation der Gelenkgabel 2 stattfinden kann, um ein Reibungsmoment gemäß der gewählten Lagerluft in den Lagerelementen 9 zu überwinden. In axialer Richtung erlaubt das elastische Kupplungselement 7 so eine Nachgiebigkeit, die zur Isolation genutzt werden kann, während die Kontur des elastischen Kupplungselementes 7 eine hohe Drehsteifigkeit bereitstellt.

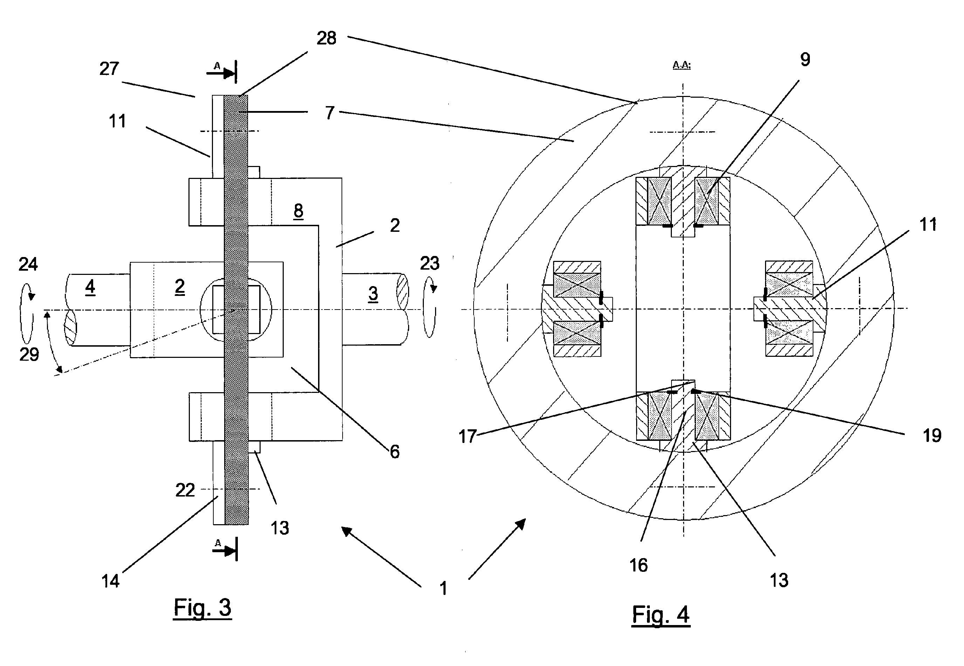

In den Figuren 3 und 4 ist ein weiteres Ausführungsbeispiel des erfindungsgemäßen Kardangelenks 1 dargestellt. Im Unterschied zu dem in den Figuren 1 und 2 dargestellten Ausführungsbeispiel sind die Befestigungselemente 11 mit ihrem L-förmigen Bereich 12 an der Außenseite 18 der Gelenkgabeln 2 bzw. deren Gabelschenkel 8 angeordnet, so dass der Zapfen 16 mit seinem freien Ende 17 etwas in den Innenraum 6 hinein ragt. Der Basissteg 14 ist hierbei radial nach außen orientiert. Der Quersteg 13 liegt an dem Lagerelement 9 bzw. dem zur Außenseite 18 orientierten Seite des Lagerelementes 9 an.

Das elastische Kupplungselement 7 ist als Ring, insbesondere Kreisring, vorzugsweise als torsionssteifer, biege-elastischer bzw. axial elastischer Ring z.B. Kreisring oder vieleckiger oder polygonaler Ring ausgestaltet und um die Außenseite 18 der Gelenkgabeln 2 bzw. deren Gabelschenkel 8 herum geführt, wobei der Basissteg 14 im Vergleich mit den Figuren 1 und 2 etwas länger ausgestaltet ist. In dem dargestellten Ausführungsbeispiel weist der Basissteg 14 in etwa eine an den Ring angepasste Ausgestaltung auf, so dass der Basissteg 14 mit seinem freien Ende 27 bündig mit einer Außenseite 28 des elastischen Kupplungselementes 7 abschließt. Vorteilhafter Weise kann das Kardangelenk 1 bei einer Ausgestaltung nach dem Figuren 3 und 4 mit einem als Ring ausgestalteten elastischen Kupplungselement 7 kleiner ausgeführt werden als bei einer Ausgestaltung nach dem Beispiel zu den Figuren 1 und 2, wobei eine axiale Flexibilität bei gleicher Rotationssteifigkeit vergrößert werden kann. Ansonsten entspricht das Ausführungsbeispiel nach den Figuren 3 und 4 dem Ausführungsbeispiel nach den Figuren 1 und 2.

Das in den Figuren 1 bis 4 dargestellte Kardangelenk 1 eignet sich insbesondere zur Verwendung in einer Lenksäule eines Kraftfahrzeuges. Die Wellen 3 bzw. 4 sind zueinander gefluchtet dargestellt. Im Fahrzeug liegt üblicherweise eine zueinander abgewinkelte Position vor, wobei das Kardangelenk die Drehübertragung aufrechterhält. Die abgewinkelte Position ist in den Figuren 1 und 3 mittels des Inklinationswinkels 29 dargestellt.

## Patentansprüche

1. Kardangelenk, das zwei Gelenkgabeln (2) aufweist, wobei eine der Gelenkgabeln (2) mit einer angetriebenen Welle (3) bzw. Antriebswelle und die andere Gelenkgabel (2) mit einer anzutreibenden Welle (4) bzw. Abtriebswelle verbindbar bzw. verbunden ist, und wobei die beiden Gelenkgabeln (2) um 90° radial verdreht zueinander angeordnet sind, so dass die beiden Gelenkgabeln (2) einen Innenraum (6) bilden, und wobei dem Kardangelenk (1) ein elastisches Kupplungselement (7) zugeordnet ist,
**dadurch gekennzeichnet, dass**
den Gelenkgabeln (2) einander identische Befestigungselemente (11) mit einem L-förmigen Bereich (12) zugeordnet sind, wobei der L-förmige Bereich (12) einen Quersteg (13) und einen radial von diesem weggerichteten, senkrecht zu dem Quersteg (13) angeordneten Basissteg (14) aufweist, wobei der L-Förmige Bereich in einen Zapfen (16) übergeht, der in in den Gelenkgabeln (2) bzw. deren Gabelschenkeln (8) fixierten Lagerelementen (9) mit radial ausgerichteter Drehachse drehbar gelagert ist, wobei der Zapfen (16) die Gabelschenkel (8) einseitig mit einem freien Ende (17) überragt, wobei der Zapfen (16) an seinem freien Ende (17) mit einem Sicherungselement (19) sicherbar ist, wobei die Basisstege (14) mit dem elastischen Kupplungselement (7) verbunden sind, so dass die Befestigungselemente (11) über das elastische Kupplungselement (7) miteinander verbunden sind.

2. Kardangelenk nach Anspruch 1,
**dadurch gekennzeichnet, dass**
die Lagerelemente (9) derart ausgestaltet sind, dass diese ein Biegemoment aufnehmen können.

3. Kardangelenk nach Anspruch 1 oder 2,
**dadurch gekennzeichnet, dass**
die Befestigungselemente (11) als Drehbolzen ausgeführt sind.

4. Kardangelenk nach einem der vorhergehenden Ansprüche,
**dadurch gekennzeichnet, dass**
das Befestigungselement (11) mit seinem L-förmigen Bereich (12) im Innenraum (6) angeordnet ist.

5. Kardangelenk nach einem der vorhergehenden Ansprüche,
**dadurch gekennzeichnet, dass**
das elastische Kupplungselement (7) im Innenraum (6) angeordnet, und als Scheibe ausgestaltet ist.

6. Kardangelenk nach einem der Ansprüche 1 bis 3,
**dadurch gekennzeichnet, dass**
das Befestigungselement (11) mit seinem L-förmigen Bereich (12) an einer zum Innenraum (6) gegenüberliegenden Außenseite (18) der Gelenkgabeln (2) angeordnet ist.

7. Kardangelenk nach Anspruch 6,
**dadurch gekennzeichnet, dass**
das elastische Kupplungselement (7) als Ring ausgestaltet, und um die Außenseiten (18) der Gelenkgabeln (2) geführt ist.

8. Kardangelenk nach einem der vorhergehenden Ansprüche,
**dadurch gekennzeichnet, dass**
das elastische Kupplungselement (7) mit den Befestigungselementen (11) beispielsweise mittels einer Verschraubung, Vernietung, Vulkanisierung oder dergleichen verbunden ist.

## Claims

1. Cardanic joint which has two joint forks (2), one of the joint forks (2) being connectable or connected to a driven shaft (3) or drive shaft and the other joint fork (2) being connectable or connected to a shaft (4) which is to be driven or output shaft, and the two joint forks (2) being arranged in a manner which is rotated radially by 90° with respect to one another, with the result that the two joint forks (2) form an inner space (6), and the cardanic joint (1) being assigned an elastic coupling element (7), **characterized in that** the joint forks (2) are assigned mutually identical fastening elements (11) having an L-shaped region (12), the L-shaped region (12) having a transverse web (13) and a base web (14) which is directed radially away from the former and is arranged perpendicularly with respect to the transverse web (13), the L-shaped region merging into a journal (16) which is mounted such that it can rotate with a radially oriented rotational axis in bearing elements (9) which are fixed in the joint forks (2) or their fork limbs (8), the journal (16) protruding with one free end (17) beyond the fork limbs (8) on one side, it being possible for the journal (16) to be secured at its free end (17) by way of a securing element (19), the base webs (14) being connected to the elastic coupling element (7), with the result that the fastening elements (11) are connected to one another via the elastic coupling element (7).

2. Cardanic joint according to Claim 1, **characterized in that** the bearing elements (9) are configured in such a way that they can absorb a bending moment.

3. Cardanic joint according to Claim 1 or 2, **characterized in that** the fastening elements (11) are configured as pivot pins.

4. Cardanic joint according to one of the preceding claims, **characterized in that** the fastening element (11) is arranged with its L-shaped region (12) in the inner space (6).

5. Cardanic joint according to one of the preceding claims, **characterized in that** the elastic coupling element (7) is arranged in the inner space (6) and is configured as a disc.

6. Cardanic joint according to one of Claims 1 to 3, **characterized in that** the fastening element (11) is arranged with its L-shaped region (12) on an outer side (18) of the joint forks (2), which outer side (18) lies opposite the inner space (6).

7. Cardanic joint according to Claim 6, **characterized in that** the elastic coupling element (7) is designed as a ring and is guided around the outer sides (18) of the joint forks (2).

8. Cardanic joint according to one of the preceding claims, **characterized in that** the elastic coupling element (7) is connected to the fastening elements (11), for example, by means of a screw connection, riveting, vulcanization or the like.

## Revendications

1. Joint à croisillon, présentant deux fourchettes de joint (2), l'une des fourchettes de joint (2) pouvant être connectée ou étant connectée à un arbre entraîné (3) ou un arbre d'entraînement et l'autre fourchette de joint (2) pouvant être connectée ou étant connectée à un arbre à entraîner (4) ou un arbre de sortie, et les deux fourchettes de joint (2) étant disposées de manière tournée radialement de 90° l'une par rapport à l'autre, de sorte que les deux fourchettes de joint (2) forment un espace interne (6) et un élément d'accouplement élastique (7) étant associé au joint à croisillon,
**caractérisé en ce que**
des éléments de fixation (11) identiques les uns aux autres sont associés aux fourchettes de joint (2) avec une région en forme de L (12), la région en forme de L (12) présentant une partie transversale (13) et une partie de base (14) radialement éloignée de celle-ci, disposée perpendiculairement à la partie transversale (13), la région en forme de L se prolongeant par un tourillon (16), qui est monté à rotation dans des éléments de palier (9) avec un axe de rotation orienté radialement, qui sont fixés dans les fourchettes de joint (2) ou leurs branches de fourchette (8), le tourillon (16) dépassant au-delà des branches de fourchette (8) d' un côté par une extrémité libre (17), le tourillon (16) pouvant être fixé à son extrémité libre (17) à un élément de fixation (19), les parties de base (14) étant connectées à l'élément d'accouplement élastique (7), de sorte que les éléments de fixation (11) soient connectés les uns aux autres par le biais de l'élément d'accouplement élastique (7) .

2. Joint à croisillon selon la revendication 1,
**caractérisé en ce que**
les éléments de palier (9) sont configurés de telle sorte qu'ils puissent recevoir un couple de flexion.

3. Joint à croisillon selon la revendication 1 ou 2,
**caractérisé en ce que**
les éléments de fixation (11) sont réalisés sous forme de goupilles.

4. Joint à croisillon selon l'une quelconque des revendications précédentes,
**caractérisé en ce que**
l'élément de fixation (11) est disposé avec sa région en forme de L (12) dans l'espace interne (6).

5. Joint à croisillon selon l'une quelconque des revendications précédentes,
**caractérisé en ce que**
l'élément d'accouplement élastique (7) est disposé dans l'espace interne (6) et est réalisé sous forme de disque.

6. Joint à croisillon selon l'une quelconque des revendications 1 à 3,
**caractérisé en ce que**
l'élément de fixation (11) est disposé avec sa région en forme de L (12) sur un côté extérieur (18) des fourchettes de joint (2) opposé à l'espace interne (6).

7. Joint à croisillon selon la revendication 6,
**caractérisé en ce que**
l'élément d'accouplement élastique (7) est réalisé sous forme de bague et est guidé autour des côtés extérieurs (18) des fourchettes de joint (2).

8. Joint à croisillon selon l'une quelconque des revendications précédentes,
**caractérisé en ce que**
l'élément d'accouplement élastique (7) est connecté aux éléments de fixation (11), par exemple au moyen d'un vissage, d'un rivetage, de vulcanisation ou similaire.
